# EUROPÄISCHE PATENTSCHRIFT

(11) **EP 3 848 178 B1**
(45) Veröffentlichungstag und Bekanntmachung des Hinweises auf die Patenterteilung: **09.03.2022**
(21) Anmeldenummer: 20150720.9
(22) Anmeldetag: 08.01.2020
(51) Int. Cl.: B29C 48/09, B29C 48/285, B29C 48/395, B29C 48/53

(54) **VERFAHREN ZUR HERSTELLUNG VON KUNSTSTOFFSCHLÄUCHEN**
METHOD FOR THE PRODUCTION OF PLASTIC HOSES
PROCÉDÉ DE FABRICATION DE TUYAUX EN MATIÈRE PLASTIQUE

(43) Veröffentlichungstag der Anmeldung: 14.07.2021
(73) Patentinhaber: Novoplast Schlauchtechnik GmbH, 38820 Halberstadt (DE)
(72) Erfinder: HANKEL, Andreas, 38820 Halberstadt (DE); MITZLAFF, Niels, 06463 Falkenstein/Harz OT Ermsleben (DE)
(74) Vertreter: Zenz Patentanwälte Partnerschaft mbB

(56) Entgegenhaltungen:
- EP-A1- 0 590 507
- EP-A1- 0 771 640
- EP-A2- 0 295 434
- DE-C1- 3 915 603
- JP-A- H0 516 211

## Beschreibung

Die Erfindung betrifft ein Verfahren zur Herstellung von extrudierten Endlosschläuchen. Insbesondere betrifft die Erfindung ein Verfahren, bei dem Kunststoffgranulat in einem Einschnecken-Extruder aufgeschmolzen und extrudiert wird. Als Kunststoffgranulat wird ein ultra-hochmolekulares Polyethylen (UHMW-PE) verwendet, welches über einen Einzug des Einschnecken-Extruders eingebracht wird.

Ultra-hochmolekulares Polyethylen ist ein Werkstoff, der zu Produkten mit hoher Verschleißfestigkeit und Schlagzähigkeit verarbeitet werden kann. Während viele Puduktqualitäten dieser Materialgruppe ein Molekulargewicht von bis zu 5 Millionen g/mol aufweisen, können Sonderqualitäten noch deutlich höhere Molekulargewichte aufweisen, bis hin zu 10 Millionen g/mol. Aufgrund dieser hohen Molekulargewichte resultieren die hervorragenden Materialeigenschaften, es ist aber andererseits eine sehr hohe Materialviskosität gegeben, so dass sich UHMW-PE meist nur im Pressverfahren verarbeiten lässt. Spritzguss- oder Schneckenextrusions-Verarbeitungen gelten als außerordentlich problematisch, teilweise werden sie als gänzlich unmöglich bezeichnet.

Angesichts der ausgezeichneten Materialeigenschaften, insbesondere der Verschleißfestigkeit und Schlagzähigkeit auch bei tiefen Temperaturen, besteht jedoch der Wunsch, diese Materialien auch für weitere Produkte und Verfahren zu erschließen.

Aus der EP-A 0 190 878 ist es bekannt, UHMW-PE grundsätzlich auch mit Extrudern zu verarbeiten. Dabei wird pulverförmiges Polyethylen mittels einer Extruderschnecke gefördert, aufgeschmolzen und über eine Düse ausgetragen. Um die gewünschten Fertigteileigenschaften erreichen zu können, werden die Extrudate über einen Abzug abgeführt, wobei sie verstreckt werden. Auch die EP 0 295 434 A2 offenbart ein Verfahren zur Verarbeitung von UHMW-PE per Extrusion.

Die kontinuierliche Herstellung von Schläuchen aus UHMW-PE, insbesondere von Endlosprodukten bislang nicht möglich.

Aufgabe der Erfindung ist es daher, die Möglichkeiten zur Verarbeitung von UHMW zu verbessern.

Die Aufgabe wird gelöst durch ein Verfahren mit den Merkmalen des Patentanspruches 1.

Gemäß der Erfindung wird zur Verarbeitung des UHMW-PE ein Kunststoffgranulat verwendet, welches über einen Einzug dem Einschnecken-Extruder zugeführt wird. Das Granulat kann grundsätzlich eine beliebige Kornform aufweisen, die Korngröße sollte jedoch geringer als 10 mm sein, insbesondere zwischen 2 mm und 6 mm liegen.

Der Extruder weist erfindungsgemäß eine Drei-Zonen-Extruderschnecke mit grundsätzlich bekannter Zonenteilung auf, nämlich mit Einzugszone, Kompressionszone und Meteringzone. Die Drei-Zonen-Extruderschnecke weist umlaufende Stege auf und hat einen Durchmesser D, wobei die Steghöhe der Extruderschnecke in der Eingangszone höchstens 1/5 D beträgt. Die Steghöhe in der Kompressionszone weist einen Wert von höchstens von 1/8 D auf und die Steghöhe in der Meteringzone beträgt höchstens 1/10 D.

Die Schnecke ist also grundsätzlich nach einem bekannten und gebräuchlichen Schema der Zonenteilung aufgebaut, wobei der als Granulat eingefüllte Feststoff im Einzugsbereich der Schnecke eingezogen und gefördert wird und in der Kompressionszone das Material verdichtet und aufgeschmolzen wird. In der Meteringzone schließlich wird der notwendige Druck aufgebaut, die Schmelze homogenisiert und auf die gewünschte Temperatur gebracht. Es hat sich gezeigt, dass mit den Steghöhenmaßen in Bezug auf den Durchmesser eine optimierte Aufschmelzung des problematisch zu handhabenden ultra-hochmolekularen Polyethylens erreicht werden kann.

Der Meteringzone für den Materialfluss des Extrudat nachgeordnet ist ein Werkzeug mit Ringspaltöffnung, wobei der Abstand zwischen der Spitze der Extruderschnecke und dem Einlauf des Werkzeuges höchstens 1/4 D beträgt. Damit sind ausdrücklich auch Fälle umfasst, bei denen die Schneckenspitze bis in das Extruder-Werkzeug hineinragt. In diesem Fall wäre entsprechend von negativen Abständen zu sprechen. Eine solche Gestaltung hat sich in den Experimenten als vorteilhaft erwiesen, da die Kunststoffschmelze selbst beim Eintritt und innerhalb des Werkzeugs in Bewegung gehalten wird.

Im Gegensatz zu bekannten Ansätzen, UHMW-PE zu extrudieren, welche ausdrücklich eine Ausbildung einer schneckenfreien Ausgleichszone von signifikanten Abmessungen vorgeschlagen wird (siehe EP 0 397 004 B1) zielt die Erfindung auf einen gegenüber dem Schneckendurchmesser sehr kurzen Abstand zwischen dem Ende der Extruderschnecke und dem Einlauf des Werkzeuges.

Die erfindungsgemäße Nutzung eines Werkzeuges mit Ringspaltöffnung liefert das gewünschte schlauchförmige Extrudat, welches anschließend, ggf. unter Durchlauf von Kalibrierung und Kühlung, verstreckungsfrei und kontinuierlich in Extrusionsrichtung als Endlosschlauch abgezogen wird.

Als Werkzeuge mit Ringspaltöffnung kommen die bekannten Werkzeuge in Frage, insbesondere Dornhalter-Werkzeuge, Siebkorb-Werkzeuge, Wendelverteiler-Werkzeuge oder auch Pinolen-Werkzeuge. Während gemäß der Erfindung grundsätzlich sämtliche dieser Werkzeuge eingesetzt werden können, liefern insbesondere die Pinolen-Werkzeuge sehr gute Ergebnisse, da sie strömungstechnische Totpunkte im Spritzkopf weitestgehend vermeiden. Die Erfindung zeigt sich sowohl bei der Nutzung von Herzkurvenverteilern als auch der Nutzung von Kleiderbügelverteilern als Pinolen-Werkzeuge äußerst vorteilhaft hinsichtlich der Qualität und Eigenschaft des Extrudats.

Gemäß der Erfindung wird es ermöglicht, einen Endlosschlauch aus ultra-hochmolekularen Polyethylen zu erstellen, welcher alle vorteilhaften Wirkungen dieses Materials aufweist und kontinuierlich produzierbar ist, so dass selbst lange Schläuche bereitstellbar sind. Die Kombination der Abstimmung der Extruderschnecke in ihren Zonen und der unmittelbaren Nachordnung eines Ringspalt-Werkzeuges ermöglicht es das als äußerst schwierig zu verarbeitende Material als Endlosextrudat mit nahezu beliebiger Schlauchgestaltung zu verarbeiten. Das resultierende schlauchförmige Extrudat kann anschließend in herkömmlicher Weise weiter behandelt werden, insbesondere kann, wie vorstehend bereits erwähnt, dem Werkzeug mit Ringspaltöffnung eine Kalibrierung, Kühlung sowie ein Abzug nachgeordnet sein.

Bei der Kalibrierung kann in bekannter Weise ein Vakuum angelegt werden, um das schlauförmige Extrudat in Kontakt mit den Kalibriermitteln zu bringen. Alternativ kann mit erhöhtem Innendruck im extrudierten Schlauch eine Kalibrierung erreicht werden.

In einer bevorzugten Ausgestaltung der Erfindung ist im Einlaufbereich des Werkzeuges mit Ringspaltöffnung ein Schmelzefilter angeordnet, dessen Maschenzahl höchstens 250 Mesh beträgt. Durch den Schmelzefilter mit der genannten Maschenweite werden Verunreinigungen zurückgehalten und es erfolgt eine weitere Homogenisierung des Extrusionsmaterials. Soweit hier von einer Maschenweite im genannten Rahmen die Rede ist, wird zur Definition auf die DIN EN ISO 9044 hinsichtlich der Terminologie verwiesen.

In einer bevorzugten Ausgestaltung der Erfindung wird die Temperatur der Schmelze benachbart zu der Schneckenspitze im Extruder überwacht und auf eine Temperatur im Bereich von 160 °C bis 280 °C eingestellt.

Der genannte Temperaturbereich hat sich als besonders vorteilhaft hinsichtlich der Eigenschaften und Defektfreiheit des resultierenden extrudierten Endlosschlauches erwiesen. Die eingestellte Temperatur sollte dabei in Abhängigkeit von dem verwendeten Ausgangsstoff, insbesondere in Abhängigkeit von dem Molekulargewicht des verwendeten Ausgangsstoffes optimiert werden.

Gemäß einer bevorzugten Ausgestaltung der Erfindung ist die Schneckenspitze der Drei-Zonen-Extruderschnecke parabolisch ausgeformt.

Die Gestaltung einer parabolischen Schneckenspitze, also einer Schneckenspitze mit parabolischem Querschnitt, begünstigt die erwünschte Durchmischung und Strömungsverhältnisse beim Übergang zwischen dem Ende der Schnecke und dem nachgeordneten Werkzeug. Diese Gestaltung der Schneckenspitze hat sich gegenüber spitz zulaufenden Schneckenspitzen als überlegen herausgestellt.

In einer Abwandlung der Erfindung ist die Schneckenspitze wenigstens abschnittsweise kegelförmig mit einer Neigung von höchstens 20 Grad ausgeformt.

Auch bei dieser Gestaltung der Schneckenspitze mit einer kegelförmigen Gestaltung geringer Neigung, die mit einem parabolischen Abschluss der Schneckenspitze kombinierbar ist, wird gemäß der Erprobung ein besonders homogenes Ergebnis der produzierten Produkten erreicht.

Gemäß einer Weiterbildung der Erfindung wird die Umfangsgeschwindigkeit der Extruderschnecke auf wenigstens 5 cm/s eingestellt. Es hat sich gezeigt, dass eine geringere Geschwindigkeit zu einer Verschlechterung der Schmelzvorgänge und Kompressionsvorgängen und insbesondere auch der Homogenisierung des zu extrudierenden Materials führt.

Es ist besonders bevorzugt, dass dem Ringspalt-Werkzeug eine Wasser-Kühlstrecke nachgeordnet ist, ggf. unter Zwischenschaltung von Kalibrierwerkzeugen, wobei die Temperatur des Kühlwassers entlang der gesamten Kühlschrecke an keiner Stelle größer als 70 Grad ist, also überall kleiner 70 Grad beträgt.

Die Kühlung des Materials in der genannten Weise führte gemäß den Beobachtungen der Erfinder zu besonders defektarmen und reproduzierbaren Ergebnissen bei der Herstellung von Endlosschläuchen.

Es ist weiterhin vorteilhaft, wenn bei dem Extruder die Länge des gesamten Zylinders in welchem die Drei-Zonen-Extruderschnecke angeordnet ist, kleiner als das 20-Fache des Durchmessers D der Schnecke beträgt, also gilt L<20D. Bei der Extruderschnecke vorzugsweise um eine Schnecke ohne Mischteil handeln, besonders bevorzugt ohne Barrierestege.

Es ist weiterhin bevorzugt, dass der aufgeschmolzene Kunststoff beim Eintritt in das Werkzeug mit Ringspaltöffnung oder beim Eintritt in den Schmelzefilter unter einem Druck von 70 bis 110 bar steht, da sich so eine besonders glatte Oberflächenstruktur des extrudierten Endlosschlauches ergibt.

Im Übrigen kann der gesamte Fließweg der Schmelze entlang der Extruderschnecke und entlang der Zonen der Drei-Zonen-Extruderschnecke beheizt und temperaturkontrolliert sein.

Die Erfindung wird nun anhand der beiliegenden Zeichnung näher erläutert.

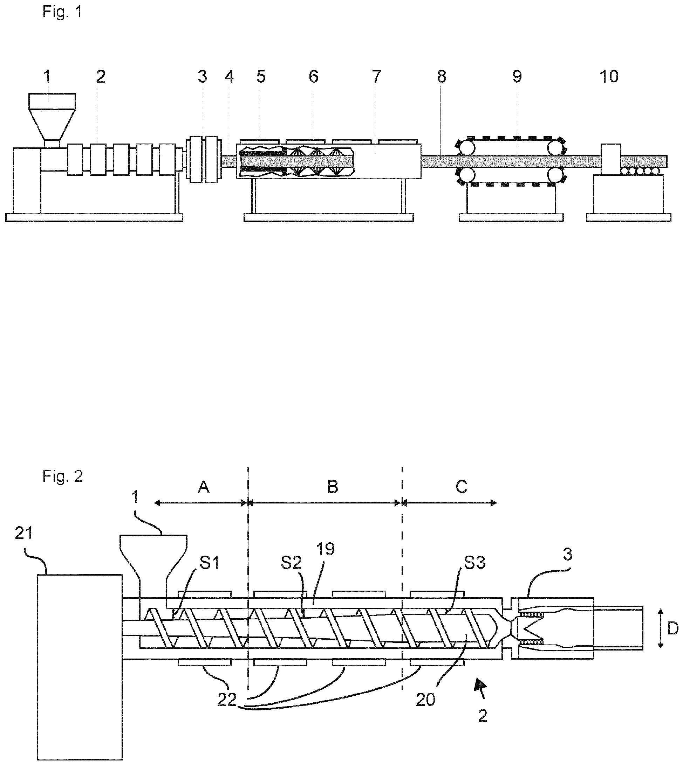

Figur 1 zeigt eine schematische Ansicht einer Extrusionslinie, in welcher das erfindungsgemäße Verfahren durchführbar ist;
Figur 2 zeigt eine schematische Schnittansicht eines Drei-Zonen-Extruders zur Durchführung des erfindungsgemäßen Verfahrens;
Die schematische Darstellung einer Extrusionslinie in Figur 1 zeigt einen Extruder 2, der mit einem Einfülltrichter 1 ausgestattet ist. Das ultra-hochmolekulare Polyethylen wird als Granulat in den Einfülltrichter 1 eingefüllt und dem Extruder 2 zugeführt. Die Korngröße des Granulats beträgt gemäß diesem Ausführungsbeispiel der Erfindung 2 bis 6 mm, wobei die Formgebung der Körner nicht relevant ist. Grundsätzlich ist ein Vortrocknen des Granulats nicht erforderlich, bei bestimmten Granulattypen kann es sich jedoch als vorteilhaft erweisen, das Granulat mit einem Trockenlufttrockner vorzutrocknen, beispielsweise für etwa 4 Stunden bei einer Temperatur von 80 °C.

Der dargestellte Extruder 2 weist eine glatte Einzugszone auf, so dass in dem Einzugsbereich ein geringer Schereintrag in das Material einfließt. Das Verhältnis von Länge zu Durchmesser des Zylinders, welcher die Drei-Zonen-Extruderschnecke aufweist, ist kleiner als 20. Dem Extruder 2 in Figur 1 nachgeordnet ist ein Formgebungswerkzeug 3 mit Ringspaltöffnung. Wie vorstehend bereits beschrieben, kann grundsätzlich aus den bekannten Werkzeugen mit Ringspalten gewählt werden, also aus Dornhalter-Werkzeugen, Siebkorb-Werkzeugen, Wendelverteiler-Werkzeugen und Pinolen-Werkzeugen. Unter den Pinolen-Werkzeugen haben sich die Werkzeuge mit Kleiderbügel-Verteiler oder Herzkurvenverteiler als besonders vorteilhaft erwiesen. In diesem Ausführungsbeispiel kommt ein Siebkorb-Werkzeug zum Einsatz.

Wie unten beschrieben, ist der Einlaufbereich des Werkzeugs 3 dicht an das Ende der Erstreckung der Drei-Zonen-Extruderschnecke des Extruders 2 platziert. Aus dem Werkzeug 3 tritt das schlauchförmige heiße Extrudat 4 aus und wird in ein Kalibriermittel 5 geführt. Dort kann, ggf. unter Unterstützung von äußerem Vakuum oder innerem Überdruck, eine Kalibrierung des heißen Schlauch-Extrudats 4 vorgenommen werden, bevor Sprühdüsen 6 und ein Kühltank 7 durchlaufen werden.

In Abhängigkeit von der produzierten Profilbreite bzw. dem Durchmesser des produzierten Extrudats können unterschiedliche Behandlungsschritte nachgeordnet werden. Bei kleinen Profilbreiten und Durchmessern, beispielsweise kleiner als 4 mm kommt eine direkte Vorkühlung des Extrudats in Frage, mit einer nachgeordneten vakuum- oder überdruckgestützten Stabilisierung. Bei größeren Profilbreiten und Durchmessern, beispielsweise ab 4 mm erfolgt die geometrische Formgebung des Extrusionsprofils über eine vakuumgestützte Außenkalibrierung, bei welcher der formgebende Bereich der Kalibrierung maximal 10% größer als das Nennmaß des Profils ist.

Das nunmehr erkaltete Extrudat 8 wird über den Abzug 9 gefördert und ggf. einer Trenneinrichtung 10 zugeführt.

Figur 2 zeig die wesentlichen Komponenten des Extruders 2 in einer schematischen Schnittansicht. Wiederum ist der Einfülltrichter 1 gezeigt, welcher das Granulat des ultra-hochmolekularen Polyethylens aufnimmt und dem Zylinder 19 des Extruders zuführt, in welchem eine Drei-Zonen-Extruderschnecke 20 zur Förderung und Kompression des Extrudats rotiert. Dafür ist die Drei-Zonen-Extruderschnecke 20 mit einem Antrieb 21 gekoppelt. Als Drei-Zonen-Extruderschnecke 20 wird eine kernprogressive Mehrzonenschnecke eingesetzt, wobei in diesem Ausführungsbeispiel die Schneckenspitze parabolisch ausgeformt ist. Die Drei-Zonen-Extruderschnecke 20 weist eine Einzugszone A, eine Kompressionszone B und eine Meteringzone C auf. Heizmittel 22 sind außen am Zylinder 19 angeordnet, um den Zylinder 19 zur Aufschmelzung des Materials zu heizen. Die Umlaufgeschwindigkeit der Drei-Zonen-Extruderschnecke 20 ist so bemessen, dass eine Umfangsgeschwindigkeit am äußeren Umfang der Schneckenstege von mindestens 5 cm/s vorliegt. Wie außerdem vorstehend beschrieben, beträgt bei einem Schneckendurchmesser D die Steghöhe S1 in der Einzugszone höchstens 1/5 D, die Steghöhe S2 in der Kompressionszone 1/8 D und die Steghöhe S3 in der Meteringzone 1/10 D.

Der Schneckenspitze in Förderrichtung des Materials unmittelbar nachgeordnet ist das Werkzeug 3, welches hier als Siebkorb-Werkzeug ausgeführt ist. Das Siebkorb-Werkzeug ist in der herkömmlichen Weise mit Siebkorbhalter, Siebkorb und Dorn ausgebildet. In der Zeichnung nicht gezeigt, jedoch grundsätzlich zwischen Werkzeug 3 und Extruder 2 einbringbar ist ein Schmelzefilter, wobei die Anzahl der Maschen des Schmelzefilters 250 Mesh nicht überschreiten soll.

Der Abstand zwischen der Schneckenspitze der Drei-Zonen-Extruderschnecke 20 und dem Werkzeug 3 beträgt weniger als ein Viertel des Durchmessers der Drei-Zonen-Extruderschnecke. Die Schmelzetemperatur im Bereich der Schneckenspitze soll zwischen 160 und 280 °C liegen, wobei der Messpunkt der Schmelzetemperatur am Ende des Zylinders in der Schmelze angeordnet ist.

## Patentansprüche

1. Verfahren zur Herstellung von extrudierten Schläuchen, wobei ein Kunststoffgranulat in einem Einschnecken-Extruder (2) aufgeschmolzen und extrudiert wird,
wobei als Kunststoffgranulat ein ultrahochmolekulares Polyethylen (UHMW-PE) verwendet wird, welches über einen Einzug des Einschnecken-Extruders (2) eingebracht wird,
**dadurch gekennzeichnet,**
**dass** im Extruder eine 3-Zonen-Extruderschnecke mit einer Einzugszone (A), Kompressionszone (B) und einer Meteringzone (C) verwendet wird, welche umlaufende Stege und einen Durchmesser D hat,
wobei die Steghöhe (S1) der Extruderschnecke in der Einzugszone höchstens das 1/5-fache des Durchmessers D beträgt,
wobei die Steghöhe (S2) in der Kompressionszone höchstens das 1/8-fache des Durchmessers D beträgt und
wobei die Steghöhe (S3) in der Meteringzone höchstens das 1/10-fache des Durchmessers D beträgt,
wobei der Meteringzone (C) ein Werkzeug (3) mit Ringspaltöffnung nachgeordnet ist, wobei der Abstand zwischen Spitze der Extruderschnecke (20) und Einlauf des Werkzeugs (3) höchstens 1/4D beträgt,
wobei das schlauchförmige Extrudat verstreckungsfrei und kontinuierlich in Extrusionsrichtung als Endlosschauch abgezogen wird.

2. Verfahren nach Anspruch 1, wobei im Einlauf des Werkzeugs ein Schmelzefilter angeordnet wird, dessen Maschenzahl höchstens 250 Mesh beträgt.

3. Verfahren nach einem der Ansprüche 1 oder 2, wobei eine Temperatur der Schmelze benachbart zu der Schneckenspitze von 160-280 Grad Celsius eingestellt wird.

4. Verfahren nach einem der vorangehenden Ansprüche, wobei die Schneckenspitze parabolisch ausgeformt ist.

5. Verfahren nach einem der Ansprüche 1 bis 4, wobei die Schneckenspitze wenigstens abschnittsweise kegelförmig mit einer Neigung von höchstens 20 Grad ausgeformt ist.

6. Verfahren nach einem der vorangehenden Ansprüche, wobei die Umfangsgeschwindigkeit der Extruderschnecke wenigstens 5cm/s beträgt.

7. Verfahren nach einem der vorangehenden Ansprüche, wobei das Extrudat nach dem Austritt aus dem Ringspalt-Werkzeug eine Wasser-Kühlstrecke durchläuft, wobei die Temperatur des Kühlwassers entlang der gesamten Kühlstrecke kleiner als 70 Grad Celsius beträgt.

## Claims

1. Method for producing extruded hoses, wherein a plastic granulate is melted and extruded in a single-screw extruder (2),
wherein an ultra-high molecular weight polyethylene (UHMW-PE) is used as the plastic granulate, which is introduced via a feed of the single-screw extruder (2),
**characterized in that**
a 3-zone extruder screw with a feed zone (A), compression zone (B) and metering zone (C) is used in the extruder, which screw has circumferential webs and a diameter D
wherein the web height (S1) of the extruder screw in the feed zone is at most 1/5 times the diameter D,
wherein the web height (S2) in the compression zone is at most 1/8 times the diameter D, and
the web height (S3) in the metering zone being at most 1/10 times the diameter D,
wherein a die (3) with annular gap opening is arranged downstream of the metering zone (C), wherein the distance between the tip of the extruder screw (20) and the inlet of the die (3) is at most 1/4 times D,
wherein the tubular extrudate is drawn off without stretching and continuously in the extrusion direction as an endless hose.

2. Method according to claim 1, wherein a melt filter is arranged in the inlet of the die, the mesh number of which is at most 250 mesh.

3. Method according to one of claims 1 or 2, wherein a temperature of the melt adjacent to the screw tip of 160-280 degrees Celsius is set.

4. Method according to any one of the preceding claims, wherein the screw tip is parabolically shaped.

5. Method according to any one of claims 1 to 4, wherein the screw tip is formed at least in sections in a conical shape with an inclination of at most 20 degrees.

6. Method according to any one of the preceding claims, wherein the peripheral speed of the extruder screw is at least 5 cm/s.

7. Method according to one of the preceding claims, wherein the extrudate passes through a water cooling section after exiting the annular gap die, wherein the temperature of the cooling water along the entire cooling section is less than 70 degrees Celsius.

## Revendications

1. Procédé de fabrication de tuyaux extrudés, dans lequel un granulé de matière plastique est fondu et extrudé dans une extrudeuse monovis (2),
dans lequel comme granulé de matière plastique un polyéthylène à poids moléculaire ultra-élevé (UHMW-PE) est utilisé, qui est introduit par un entrée de chargement de l'extrudeuse monovis (2),
**caractérisé en ce que**
l'on utilise dans l'extrudeuse une vis d'extrudeuse à 3 zones avec une zone de chargement (A), une zone de compression (B) et une zone de metering (C), qui a des entretoises périphériques et un diamètre D,
la hauteur de l'entretoise (S1) de la vis d'extrudeuse dans la zone de chargement étant au maximum égale à 1/5 du diamètre D,
la hauteur de l'entretoise (S2) dans la zone de compression étant au maximum égale à 1/8 du diamètre D, et
la hauteur de l'entretoise (S3) dans la zone de metering étant au maximum égale à 1/10 du diamètre D,
un outil (3) avec une ouverture de fente annulaire étant placé en aval de la zone de metering (C), la distance entre la pointe de la vis d'extrudeuse (20) et l'entrée de l'outil (3) étant au maximum égale à 1/4D,
l'extrudat tubulaire étant retiré sans étirage et en continu dans le sens de l'extrusion comme un tuyaux sans fin.

2. Procédé selon la revendication 1, dans lequel on dispose à l'entrée de l'outil un filtre à masse fondue dont le nombre de mailles est au maximum de 250 mesh.

3. Procédé selon l'une des revendications 1 ou 2, dans lequel une température de la masse fondue adjacente à la pointe de la vis est ajustée à 160 à 280 degrés Celsius.

4. Procédé selon l'une quelconque des revendications précédentes, dans lequel la pointe de la vis est de forme parabolique.

5. Procédé selon l'une quelconque des revendications 1 à 4, dans lequel la pointe de la vis est formée, au moins en partie, en forme de cône avec une inclinaison d'au plus 20 degrés.

6. Procédé selon l'une quelconque des revendications précédentes, dans lequel la vitesse périphérique de la vis d'extrusion est d'au moins 5 cm/s.

7. Procédé selon l'une des revendications précédentes, dans lequel l'extrudat traverse un trajet de refroidissement à l'eau après sa sortie de l'outillage à fente annulaire, la température de l'eau de refroidissement étant inférieure à 70 degrés Celsius le long de l'ensemble du trajet de refroidissement.
